# EUROPÄISCHE PATENTSCHRIFT

(11) **EP 3 157 318 B1**
(45) Veröffentlichungstag und Bekanntmachung des Hinweises auf die Patenterteilung: **12.09.2018**
(21) Anmeldenummer: 15750236.0
(22) Anmeldetag: 18.06.2015
(51) Int. Cl.: A01B 63/111

(54) **BODENBEARBEITUNGSEINHEIT SOWIE BODENBEARBEITUNGSVERFAHREN ZUR KONSERVIERENDEN BODENBEARBEITUNG**
SOIL-CULTIVATION UNIT AND SOIL-CULTIVATION METHOD FOR CONSERVING-TYPE SOIL CULTIVATION
UNITÉ DE TRAVAIL DU SOL ET PROCÉDÉ DE TRAVAIL DU SOL POUR LE TRAVAIL CONSERVATEUR DU SOL

(30) Priorität: 19.06.2014 DE 102014009090
(43) Veröffentlichungstag der Anmeldung: 26.04.2017
(73) Patentinhaber: Technische Universität Dresden, 01069 Dresden (DE)
(72) Erfinder: HERLITZIUS, Thomas, 01640 Coswig (DE); GROSA, André, 09629 Bieberstein (DE); BÖGEL, Tim, 01099 Dresden (DE)
(74) Vertreter: Kailuweit & Uhlemann Patentanwälte Partnerschaft mbB
(86) Internationale Anmeldenummer: PCT/DE2015/000315
(87) Internationale Veröffentlichungsnummer: WO 2015/192827

(56) Entgegenhaltungen:
- EP-A1- 1 825 733
- EP-A1- 1 825 734
- DE-A1- 10 145 112
- DE-A1-102007 026 279
- US-A- 4 316 510

## Beschreibung

Die Erfindung betrifft eine Bodenbearbeitungseinheit sowie ein Bodenbearbeitungsverfahren zur konservierenden Bodenbearbeitung nach den Oberbegriffen der Ansprüche 1 und 11.

Nicht wendende, konservierende Bodenbearbeitungsverfahren werden auf über 2/3 der landwirtschaftlichen Ackerflächen eingesetzt. Mit dieser Art der Bodenbearbeitung wird die Feuchtigkeit im Boden konserviert, eine Deckschicht aus Pflanzenresten an der Bodenoberfläche belassen und somit ein Verdunstungs- und Erosionsschutz gewährleistet. Zudem besteht das Arbeitsziel im Herstellen einer definierten Krümelstruktur im Boden.

Zur Bodenbearbeitung werden gezogene, passive Geräte oder von der Traktorzapfwelle angetriebene, aktive Maschinen eingesetzt. Grubber sind gezogene Geräte und werden als universell einsetzbare Arbeitsgeräte eingesetzt. Bekannte Arbeitsgeräte bestehen aus einem geschweißten Rahmen mit Grubberwerkzeugen an 2 - 4 (-8) Querbalken. Das eigentliche Grubberwerkzeug besteht aus Werkzeugkonsole, Stiel mit Scharhalter und Schar. Es sind starre Grubberstiele für schwere Böden und / oder tiefe Bodenbearbeitung oder federnde Werkzeuge (Federzinken, Striegelzinken) für flache Bodenbearbeitung bekannt. Starre Grubberstiele können beweglich am Rahmen angelenkt sein. Diese bewegliche Anlenkung dient zur Überlastsicherung ausschließlich bei Kontakt mit Steinen oder Hindernissen. Mechanische Systeme mittels Feder oder hydropneumatische Systeme mit Hydraulikzylinder - Druckspeicherkombinationen sind bekannt.

Das Schar dringt in den Boden ein, hebt den Boden, der Boden gleitet über die Scharfläche und bildet eine mehr oder weniger starke bzw. hohe Bodenwalze nach vorn, dabei krümeln sowie vermischen sich Boden mit Bewuchs oder Pflanzenresten. Heutige Schare sind, abhängig von der Baugröße, mit Radien zwischen 200 und 400mm verhältnismäßig stark um die Querachse gewölbt. Diese Wölbung ermöglicht eine aufwerfende, mischende Arbeitsweise bei geringeren Arbeitsgeschwindigkeiten von 5 bis 8 km/h.

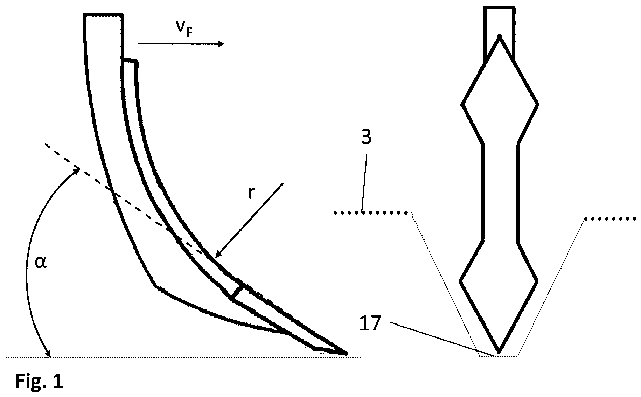

Die Winkelverhältnisse und die Werkzeugform, insbesondere Wölbung bestimmen die Arbeitsweise und den Zugkraftbedarf des Schares (Fig. 1), insbesondere der vorliegende Spreizwinkel **ϕ** bzw. Scharanstellwinkel **α.** Aus einem steilen Scharanstellwinkel bzw. einem kleinerem Wölbungsradius **r** des Schares resultiert eine starke Bodendynamik und damit eine starke Mischwirkung.

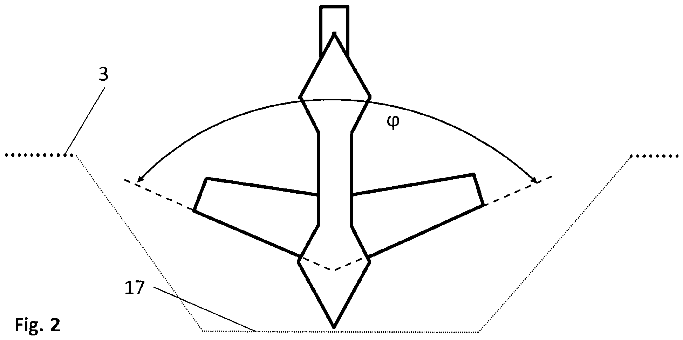

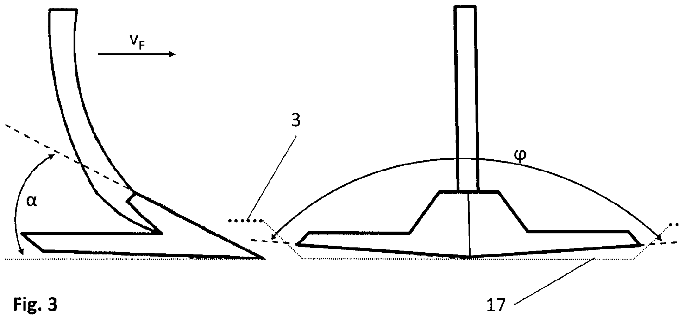

Nachteilig ist, dass sich die Arbeitsweise des Grubberschares mit der Arbeitsgeschwindigkeit ändert. Zur Beherrschung der Verhältnisse wird auf eine große Vielfalt an Schargeometrien abgestellt. Häufig verwendete Formen sind Doppelherzschar (Fig. 1), Gänsefußschar (Fig. 3). Es ist auch der Einsatz seitlicher Flügel (Fig. 2) zum ganzflächigen Durchschneiden des Bodens bekannt.

Weiterhin sind Verfahren bekannt, die Arbeitsgeräte z. B. Grubber oder Teile davon z. B. Werkzeugsektionen auf Grundlage digitaler Felddaten einstellen. Diese Einstellung kann ortsspezifisch erfolgen und z. B. als Stellgröße die Arbeitstiefe der Werkzeuge haben. Die Felddaten, wie z. B. Bodenwiderstand oder Bodenart werden zu beliebigen Zeitpunkten bei verschiedenen Arbeitsfahrten im Jahr erfasst und aufgezeichnet und auf einer digitalen Schlagkartei gespeichert. Der Rechner auf dem Schlepper kann diese aufbereiteten Datensätze zur Geräte- oder Maschineneinstellung nutzen.

So ist beispielsweise aus der EP 0 749 677 A1 ein Verfahren und eine Vorrichtung zum Ermitteln von Daten über den Zustand einer landwirtschaftlichen Fläche bekannt. Dabei wird der bei der Bearbeitung erforderliche Leistungsbedarf einer Bodenbearbeitungsmaschine oder eines -gerätes ermittelt und der jeweilige Leistungsbedarf in Verbindung mit dem Standort aufgezeichnet.

Weiterhin ist aus der DE 101 45 112 A1 ein Bodenbearbeitungsgerät mit Bodenbearbeitungswerkzeuge bekannt, die gegenüber einem Geräterahmen in aufrechter Richtung verstellbar angeordnet sind. In einer elektronischen Steuer und/oder Regeleinrichtung befindet sich eine Feldkarte mit darauf abgespeicherten ortsspezifischen Angaben über die Eindringtiefe der Bodenbearbeitungswerkzeuge im Boden. Aufgrund der auf der Feldkarte abgespeicherten Daten wird die Einstellung der Eindringtiefe (Arbeitstiefe) ortspezifisch angesteuert.

### Aufgabe der Erfindung

Aufgabe der vorliegenden Erfindung ist es, ein Gerät zur nicht wendenden, konservierenden Bodenbearbeitung anzugeben, womit die Vielfalt an Schargeometrien vermieden wird und eine gleichbleibende Bodenbearbeitung unabhängig von der Bodenqualität und der Arbeitsgeschwindigkeit erfolgt. Die Bodenbearbeitung soll in Abhängigkeit von dem aktuell vorliegenden Zustand des Bodens erfolgen.

### Lösung der Aufgabe

Erfindungsgemäß wird die Aufgabe mit den im Anspruch 1 genannten Merkmalen gelöst. Vorteilhafte Varianten ergeben sich aus den in den Unteransprüchen genannten Merkmalen.

Die Aufgabe wird weiterhin durch ein Bodenbearbeitungsverfahren mit den im Anspruch 12 genannten Merkmalen gelöst.

Die vorgeschlagene Lösung umfasst eine Bodenbearbeitungseinheit, gebildet aus einer Zugmaschine und einer angetriebene Bodenbearbeitungsmaschine oder aus einer Zugmaschine 21 und einem passiven, gezogenen Bodenbearbeitungsgerät 22, weiterhin aufweisend einen Geräteträger mit Grubberwerkzeugen zur Aufnahme eines oder mehrerer Schare. Vor und hinter sowie im Werkzeugbereich des Maschinensystems sind Sensoren angebracht, die Eingangsgrößen für eine Regelung erfassen, wie z. B. Bewuchshöhe, Bedeckungsgrade, Krümelstruktur, Bodenrelief. Die angetriebene Bodenbearbeitungsmaschine oder das gezogene Bodenbearbeitungsgerät verfügen über Einstellmöglichkeiten für die Veränderung der Arbeitsweise. Bei angetriebenen Bodenbearbeitungsmaschinen können das bekanntermaßen die Rotor- oder Kreiseldrehzahl sein. Bei gezogenen Bodenbearbeitungsgeräten fehlen Arbeitsweise beeinflussende Einstellmöglichkeiten.

Weiterhin wesentlich an der Erfindung ist, dass während der Feldarbeit eine permanente Einstellung der Schneidengeometrie erfolgt. Für die permanente Einstellbarkeit der Schneidengeometrie während der Feldarbeit ist eine Regelungseinheit vorgesehen, womit in Abhängigkeit der erfassten Messgrößen, vorzugsweise Arbeitsgeschwindigkeit, Arbeitstiefe, Aufwurfhöhe, die Schneidengeometrie der Grubberschare beeinflusst wird. Dazu werden von der Regelungseinheit Stellgröße an Stelleinrichtungen zur Veränderung der Arbeitstiefe der Grubberschare, des Anstellwinkels bzw. Schwenkwinkels und / oder Spreizwinkels geliefert.

Die permanente Einstellbarkeit der Parameter Arbeitstiefe der Grubberschare, des Anstellwinkels bzw. Schwenkwinkels und / oder Spreizwinkels als Regelgrößen erfolgt vorteilhaft in Abhängigkeit von den wesentlichen zu erfassenden Größen Bewuchszustand, Arbeitsgeschwindigkeit, Arbeitstiefe und Aufwurfhöhe, Mischintensität, Bedeckungsgrad, Bodenrelief, Krümelstruktur, die während der Bodenbearbeitung variieren. Diese Größen lassen sich während der Überfahrt vor (Eingangsgröße), in (Prozessgröße) und nach (Arbeitsergebnisgröße) der Bodenbearbeitungseinheit messen oder anderweitig erfassen. So lassen sich der Bewuchszustand vor der Bodenbearbeitungseinheit, Arbeitsgeschwindigkeit, Arbeitstiefe, Aufwurfhöhe und Mischintensität in der Bodenbearbeitungseinheit und Bedeckungsgrad, Bodenrelief und Krümelstruktur nach der Bodenbearbeitungseinheit messen bzw. erfassen.

Vorteilhaft ist eine Verstelleinrichtung am Grubberwerkzeug oder am Schar vorgesehen, die die Einstellungen von Arbeitstiefe des Schares, Scharanstellwinkel des Schares oder den Spreizwinkel des Schares - einzeln oder in unterschiedlichen Kombinationen - vor und während der Arbeit auf dem Feld ermöglichen. Die Einstellung während der Arbeit auf dem Feld erfolgt wie zuvor beschrieben.

Vorteilhaft ist für die Einstellbarkeit der Arbeitstiefe vor der Feldarbeit ein Einstellalgorithmus vorgesehen, wie er bereits zur Beeinflussung der Vorfurchenbreite bei der automatischen Pflugeinstellung verwendet wird.

Die permanente Einstellbarkeit des Parametes Spreizwinkel erfolgt vorteilhaft in Abhängigkeit von der Arbeitstiefe. So kann beispielsweise ein zügiger Geräteeinzug auf Sollarbeitstiefe am Vorgewende durch vorübergehende Einstellung kleiner Spreizwinkel erreicht werden.

Die permanente Einstellbarkeit der Arbeitstiefe eines Einzelwerkzeuges oder einer Werkzeuggruppe erfolgt weiterhin vorteilhaft in Abhängigkeit vom Verschleißzustand bzw. der Abnutzung des Werkzeuges als Störgröße. Dabei kann die Einstellung des Gerätes während der Feldarbeit als Regelung (mit Rückkopplung) oder als Steuerung bzw. offene Regelung ausgeführt sein. Die Störgrößen werden mit geeigneten Sensoren erfasst.

Mit einem geschlossenen Regelkreis können verschiedene Strategien gefahren werden, z. B. Zugkraft - optimiert oder mit konstanter Arbeitsweise, beispielsweise gleiche Mischintensität.

Mit der Regelungseinheit zur Regelung der Bodenbearbeitung wird es möglich, eine weitgehend gleichmäßige Arbeitsqualität auch bei unterschiedlichen Arbeitsgeschwindigkeiten (bergauf-/-abfahrt) zu erreichen. Weiterhin können verschiedene Betriebsstrategien gefahren, die auf einen gleichbleibenden Bedeckungsgrad zum Erosionsschutz oder eine definierte Klutengröße abstellen.

Durch die Erfindung lässt sich der progressiv mit der Arbeitsgeschwindigkeit steigende Zugkraftbedarf reduzieren (bei doppelter Arbeitsgeschwindigkeit etwa 3-facher Zugkraft/ Dieselverbrauch) und es lassen sich Arbeitsgeschwindigkeit über 8 km/h zugkraftoptimiert beherrschen, in dem auf die Schneidengeometrie Einfluss genommen wird. Damit lassen sich die bei höheren Arbeitsgeschwindigkeiten negativen Auswirkungen auf die Arbeitsweise wie steigende Bodendynamik und Mischwirkung positiv beeinflussen.

Die Erfindung wird nachstehend an Hand von Ausführungsbeispielen näher erläutert werden. In den dazugehörigen schematischen Darstellungen zeigen:
- Fig. 1: Grundaufbau, Winkelverhältnisse und Bearbeitungssohle am Doppelherzschar
- Fig. 2: Grundaufbau, Winkelverhältnisse und Bearbeitungssohle am Doppelherzschar mit Flügeln
- Fig. 3: Grundaufbau, Winkelverhältnisse und Bearbeitungssohle am Gänsefußschar (einteilig)
- Fig. 4: Bodenbearbeitungseinheit bestehend aus Zugmaschine (z. B. Traktor) und einem passiv, gezogenem Bodenbearbeitungsgerät (z. B. Grubber) mit einer Regeleinheit zur Steuerung des Arbeitsprozesses
- Fig. 5: ein landwirtschaftliches Bodenbearbeitungsgerät mit einer beispielhaften Anordnung von Grubberwerkzeugen in 4 Reihen mit einer beispielhaften Darstellung der erfindungsgemäßen, einstellbaren Grubberwerkzeuge
- Fig. 6: eine Seitenansicht zu Fig. 5 mit in Fahrtrichtung hintereinander liegenden Grubberwerkzeugen
- Fig. 7: einen Ausschnitt einer Vorderansicht zu Fig. 5 mit nebeneinanderliegenden Grubberwerkzeugen und der Darstellung der sich ausbildenden Bearbeitungssohle
- Fig. 8: eine Darstellung zur Veranschaulichung der Verstellbarkeit des Spreizwinkels der angebauten Scharflügel und damit die Realisierbarkeit zweier oder mehrerer Schargeometrien
- Fig. 9: eine Darstellung zur Veranschaulichung der Verstellbarkeit des Anstellwinkels
- Fig. 10: eine Darstellung der Änderung des Anstellwinkels durch Drehung um eine Querachse nahe der Grubberstieleinspannung sowie der vertikalen Scharverstellung (des einzelnen Stieles in der Grubberstieleinspannung oder der Stielgruppe durch Verstellung der ganzen Traverse)

Die Darstellungen in den Fig. 1 bis 3 zeigen den Stand der Technik, auf den in der Beschreibungseinleitung Bezug genommen wurde. Ein wesentliches Kriterium für die Arbeitsweise ist die Ausbildung der Bearbeitungssohle, die insbesondere durch die Form der Scharspitze und der Flügelstellung beeinflusst wird.

Fig. 1 zeigt ein Scharwerkzeug in Doppelherzform mit Bezeichnung des Anstellwinkels **α** als charakteristisches Merkmal für die Schneidengeometrie.

Fig. 2 zeigt ein Scharwerkzeug mit zusätzlichen Flügeln mit Bezeichnung des Spreizwinkels **ϕ** als charakteristisches Merkmal für die Schneidengeometrie.

Fig. 3 zeigt ein flach schneidendes Scharwerkzeug mit Bezeichnung des Anstellwinkels **α** sowie des Spreizwinkels **ϕ** als charakteristische Merkmale für die Schneidengeometrie.

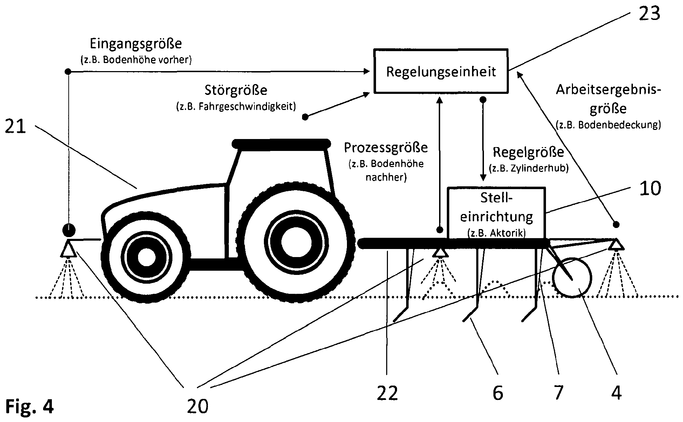

In der Fig. 4 ist eine erfindungsgemäße Bearbeitungseinheit dargestellt. Diese besteht aus einer Zugmaschine **21** und einem passiven, gezogenen Bodenbearbeitungsgerät **22.** An dem passiven, gezogenen Bodenbearbeitungsgerät **22** befinden sich mehrere Grubberschare **6** mit Verstellstangen **7** sowie ein Stützorgan, welches als Stützrad **4** ausgebildet ist. Eine Stelleinrichtung **10,** im vorliegenden Fall eine Aktorik, ist zum Einwirken mittels der Verstellstangen **7** am Bodenbearbeitungsgerät **22** angebracht.

Zur Erfassung der Messdaten vor dem Bearbeitungsbereich befinden sich an der Zugmaschine **21** Sensoren, die die Bodenhöhe oder den Bedeckungsgrad, bzw. Bewuchszustand erfassen. Zur Erfassung von Daten zum Arbeitsprozess (z. B. Wurfhöhe, Mischintensität) im Bearbeitungsbereich befinden sich am Bodenbearbeitungsgerät **22** im Bereich der Arbeitswerkzeuge Sensoren wiederum zur Erfassung der Prozesskennwerte sowie Sensoren am Ende des Bodenbearbeitungsgerätes **22** zur Erfassung des Arbeitsergebnisses (z. B. Bodenbedeckungsgrad, Bodenrelief, Krümelstruktur). Diese Messdaten werden zusätzlich mit der Größe Fahrgeschwindigkeit einer Regelungseinheit **23** zur Verfügung gestellt. Die Regelungseinheit **23** ermittelt aus den zur Verfügung stehenden Daten die Stellgröße für die Stelleinrichtung **10,** was im vorliegenden Fall der Zylinderhub ist.

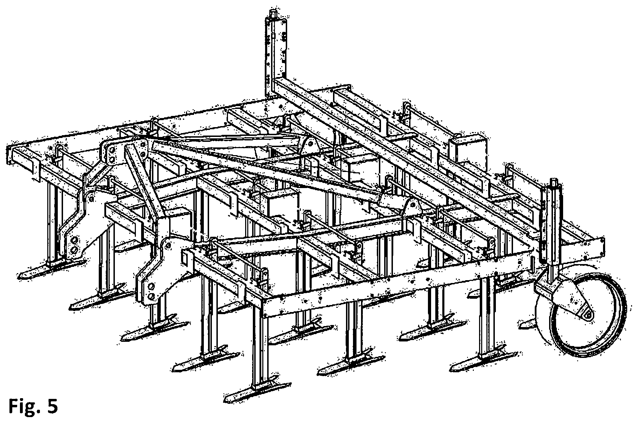

In der Fig. 5 ist ein landwirtschaftliches Gerät mit einer typischen Anordnung erfindungsgemäßer Grubberwerkzeuge in 4-balkiger Ausführung dargestellt, geeignet für eine nicht wendende, d. h. konservierende, Bodenbearbeitung. Die Werkzeuge arbeiten lockernd, mischend und werden in verschiedenen Arbeitstiefen zur Stoppelbearbeitung (flach) oder Grundbodenbearbeitung (tief) sowie Saatbettbereitung eingesetzt.

Das Gerät besteht aus mehreren quer zur Fahrtrichtung in Reihe mit einem Strichabstand **s** angeordneten Lockerungswerkzeugen. Die Tiefenführung des gesamten Maschinenrahmens **1** erfolgt über Stützräder **4.** Dies kann alternativ auch durch nachlaufende oder abrollende zylinderförmige Werkzeuge wie z. B. Krümelwalzen erfolgen.

Die Lockerungswerkzeuge sind erfindungsgemäß am Maschinenrahmen **1** bezüglich der Parameter Arbeitstiefe des Werkzeuges sowie Anstellwinkel des Schares einstellbar angeordnet. Darüber hinaus kann der Spreizwinkel der Scharanbauteile, insbesondere sogenannte Flügel einstellbar ausgebildet sein.

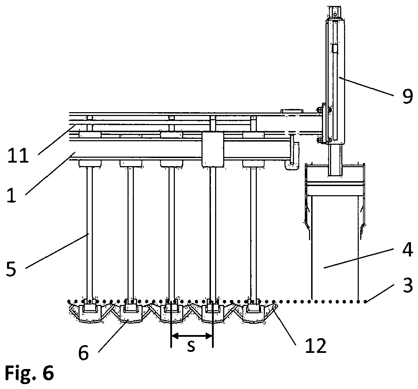

Fig. 6 zeigt die erfindungsgemäße Werkzeuganordnung der Fig. 5 in einer Ansicht von vorn.

Die an den Grubberstielen **5** angebrachten Grubberschare **6** weisen einem Strichabstand **s** voneinander auf. Die Grubberstiele **5** sind am oberen Ende mit dem Maschinenrahmen **1** verbunden. Mittels der Höhenverstellung **9** am Stützrad **4** lässt sich der Maschinenrahmen **1** gegenüber der Bodenoberfläche **3** heben oder senken und so die Arbeitstiefe der Grubberschare **6** einstellen.

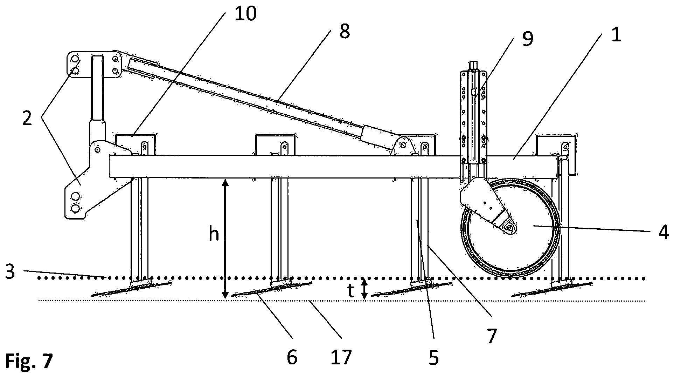

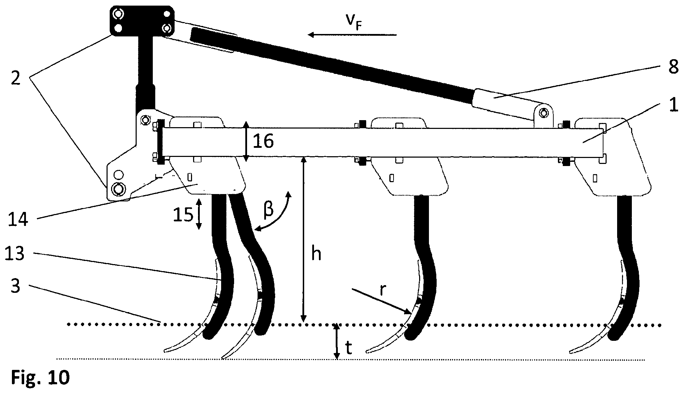

Gemäß den Darstellungen in Fig. 7 und Fig. 10 erfolgt die Einstellung für Gruppen von in einer Reihe angeordneten Werkzeugen mittels Aktoren, die am Maschinenrahmen **1** befestigt sind und auf entsprechende Mittel am Lockerungswerkzeug einwirken.

Darüber hinaus kann die Verstellung zentral für alle Werkzeuge oder dezentral für jedes Werkzeug einzeln, wobei die zentrale Stielverstellung ganzer Werkzeugreihen und gekoppelt aller Werkzeugreihen erfolgen, wie sie aus der Striegeltechnik (Parallelelogrammführungen) bereits bekannt ist.

Die Mittel zum Bewirken der Verstellung können elektrisch, hydraulisch, mechanisch oder pneumatisch ausgebildet sein. Entsprechend der Darstellung in Fig. 6 erfolgt die Einstellung mechanisch.

In der Fig. 7 ist eine der Fig. 5 und 6 entsprechenden Seitenansicht dargestellt. Die Fig. 7 zeigt in Fahrtrichtung hintereinander liegende Grubberwerkzeuge. Die Grubberwerkzeuge sind mit dem Grubberstiel **5** fest am Maschinenrahmen **1** angeordnet. Am unteren Ende des Grubberstieles **5** ist jeweils ein Grubberschar **6** schwenkbar angebracht, so dass sich der Anstellwinkel α verändern lässt. Die Verstellung erfolgt mittels einer Verstellstange **7,** die auf den Grubberschar **6** einwirkt. Die Verstellstange **7** wird angetrieben durch eine Stelleinrichtung **10,** die als Aktuator ausgebildet ist.

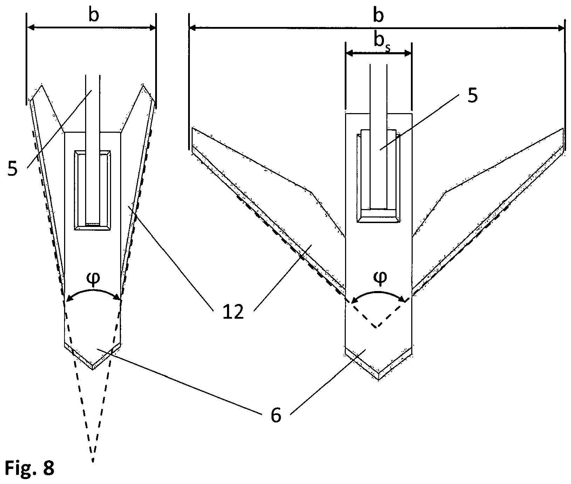

Fig. 8 zeigt eine Darstellung der Werkzeuge mit Flügeln in der Ansicht von vorn, oben. Sie veranschaulicht die Verstellung des Spreizwinkels durch Verschwenken der Flügel um eine nahezu vertikale Achse nahe der Stielachse. Damit wird die wirksame Arbeitsbreite/ Schnittbreite des Einzelwerkzeuges **b** verstellt.

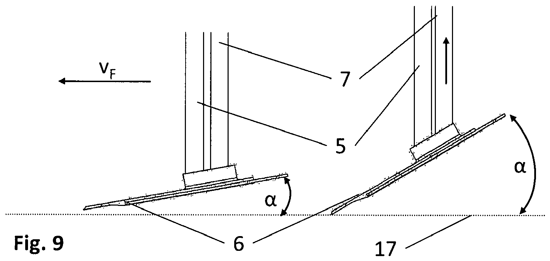

Fig. 9 zeigt eine Darstellung der Werkzeuge in der Seitenansicht. Sie veranschaulicht die Verstellung des Anstellwinkels durch Verschieben mit Hilfe einer Koppelstange. Damit wird das Schar um eine horizontale Querachse nahe der Scharbefestigung verschwenkt. So wird der Anstellwinkel verstellt.

Fig. 10 zeigt eine Darstellung einer Anordnung von Werkzeugen mit einteiligen, starren Grubberstielen und traditionellen Scharen. Der Anstellwinkel des einzelnen Werkzeuges oder einer Werkzeuggruppe wird hier durch verschwenken des Werkzeugstieles um eine horizontale Querachse nahe der Stielbefestigung am Rahmen der Werkzeugtraverse einstellbar. Die Verstellung der Arbeitstiefe des einzelnen Werkzeuges oder der Werkzeuggruppe erfolgt durch verschieben des Werkzeugstieles **15** oder der Werkzeugtraverse **16.**

### Bezugszeichenliste

- 1 -: Zentraler Maschinenrahmen
- 2 -: Koppelrahmen für den Anbau an den Heckkraftheber des Traktors
- 3 -: Bodenoberfläche mit organischer Auflage oder Bewuchs
- 4 -: Stützrad, Stützorgan
- 5 -: Grubberstiel
- 6 -: Grubberschar
- 7 -: Verstellstange
- 8 -: Verstrebung Hauptrahmen
- 9 -: Höhenverstellung Stützrad
- 10 -: Stelleinrichtung
- 11 -: Verbindung zur Verstelleinrichtung
- 12 -: Flügel
- 13 -: Grubberzinken
- 14 -: Koppelstelle
- 15 -: Werkzeugstiel
- 16 -: Werkzeugtraverse
- 17 -: Bearbeitungssohle (Seitenansicht)
- 18 -: ungefähre Bearbeitungssohle (Ansicht von vorn)
- 20 -: Sensoren
- 21 -: Zugmaschine
- 22 -: passives, gezogenes Bodenbearbeitungsgerät
- 23 -: Regelungseinheit
- α -: Anstellwinkel
- β -: Schwenkwinkel
- ϕ -: Spreizwinkel
- b -: Werkzeugbreite
- bₛ -: Scharbreite
- v_{F} -: Fahrtrichtung
- s -: Strichabstand
- t -: Arbeitstiefe
- h -: Rahmenhöhe (Durchgang)
- r -: Wölbungsradius

## Patentansprüche

1. Bodenbearbeitungseinheit, gebildet aus einer Zugmaschine (21) und einer angetriebenen Bodenbearbeitungsmaschine oder aus einer Zugmaschine (21) und einem passiven, gezogenen Bodenbearbeitungsgerät (22) zur konservierenden Bodenbearbeitung, aufweisend einen Geräteträger mit Grubberwerkzeugen zur Aufnahme eines oder mehrerer Grubberschare (6), **dadurch gekennzeichnet, dass**
- vor und hinter der Bearbeitungseinheit sowie in deren Werkzeugbereich Sensoren angebracht sind, die Eingangsgrößen für eine Regelungseinheit erfassen,
- die Regelungseinheit (23) auf Daten zurückgreift, die während des Arbeitsprozesses, vor und nach der Überfahrt eines Arbeitsbereiches sowie während des Arbeitsprozesses erfassbar sind,
- Stelleinrichtungen (10) vorgesehen sind, womit die Schneidengeometrie der Grubberschare (6) einstellbar ist,
- die Regelungseinheit (23) so eingerichtet ist, dass aus den erfassten Daten Stellgrößen für die Einstellung der Schneidengeometrie während des Arbeitsprozesse erzeugbar sind,
- die Schneidengeometrie der Grubberschare (6) infolge der erzeugten Stellgrößen während des Arbeitsprozesses permanent einstellbar ist, und
- zur Einstellung der Schneidengeometrie der Grubberschare (6) die Arbeitstiefe des Grubberschares (6), der Anstell- oder Schwenkwinkel und der Spreizwinkel einzeln oder in Kombination einstellbar ausgebildet sind, wobei die Einstellung in Abhängigkeit von durch die Sensoren vor, in und nach der Bodenbearbeitungseinheit erfassten Parametern erfolgt.

2. Bodenbearbeitungseinheit nach Anspruch 1, **dadurch gekennzeichnet, dass** die Arbeitstiefe des Grubberschares (6) durch eine vertikale Verschiebung bezogen auf die Bodenoberfläche einstellbar ist.

3. Bodenbearbeitungseinheit nach Anspruch 1, **dadurch gekennzeichnet, dass** der Anstell- oder Schwenkwinkel des Grubberschares (6) durch Schwenken bezogen auf die Bodenoberfläche einstellbar ist.

4. Bodenbearbeitungseinheit nach Anspruch 1, **dadurch gekennzeichnet, dass** der Spreizwinkel des Grubberschares (6) bezogen auf die Bodenoberfläche einstellbar ist.

5. Bodenbearbeitungseinheit nach einem der Ansprüche 1 bis 4, **dadurch gekennzeichnet, dass** die Arbeitstiefe, der Anstell- oder Schwenkwinkel und/oder der Spreizwinkel zu Beginn der Bodenbearbeitung voreinstellbar ist/sind.

6. Bodenbearbeitungseinheit nach einem der Ansprüche 1 bis 5, **dadurch gekennzeichnet, dass** die Arbeitstiefe, der Anstell- oder Schwenkwinkel und/oder der Spreizwinkel in Abhängigkeit vom Verschleiß am Schar einstellbar ist/sind.

7. Bodenbearbeitungseinheit nach einem der Ansprüche 1 bis 6, **dadurch gekennzeichnet, dass** die Arbeitstiefe, der Anstell- oder Schwenkwinkel und/oder der Spreizwinkel zentral für das gesamte Arbeitsgerät, eine Werkzeuggruppe oder dezentral für jedes Werkzeug einzeln einstellbar ist/sind.

8. Bodenbearbeitungseinheit nach einem der Ansprüche 1 bis 7, **dadurch gekennzeichnet, dass** die Arbeitstiefe, der Anstell- oder Schwenkwinkel und/oder der Spreizwinkel elektrisch, hydraulisch, mechanisch oder pneumatisch einstellbar ist/sind.

9. Bodenbearbeitungseinheit nach Anspruch 3, **dadurch gekennzeichnet, dass** zum Schwenken des Schares Drehpunkte im Bereich der Scharbefestigung am Stiel oder im Bereich der Stieleinspannung vorgesehen sind.

10. Bodenbearbeitungseinheit nach Anspruch 2 **dadurch gekennzeichnet, dass** zum vertikalen Verschieben einzelner Schare/Schargruppen zwischen Scharstiel und Grubberrahmen/Schartraverse und Grubberrahmen eine Verstelleinrichtung angebracht ist.

11. Verfahren zur Bearbeitung des Bodens mit einer Bodenbearbeitungseinheit, gebildet aus einer Zugmaschine (21) und einer angetriebenen Bodenbearbeitungsmaschine oder aus einer Zugmaschine (21) und einem passiven, gezogenen Bodenbearbeitungsgerät (22) zur konservierenden Bodenbearbeitung, aufweisend einen Geräteträger mit Grubberwerkzeugen zur Aufnahme eines oder mehrerer Grubberschare (6),
**dadurch gekennzeichnet, dass**
- während des Arbeitsprozesses vor und nach der Überfahrt eines Arbeitsbereiches sowie während des Arbeitsprozesses Messdaten durch Sensoren erfasst, einer Regelungseinheit (23) zugeführt und von dieser verarbeitet werden,
- mittels Stelleinrichtungen (10) zur Beeinflussung der Schneidengeometrie der Grubberschare (6) eine permanente Einstellung der Schneidengeometrie während des Arbeitsprozesse vorgenommen wird, wozu
- von der Regelungseinheit (23) aus durch die Sensoren vor, in und nach der Bodenbearbeitungseinheit erfassten Messdaten Stellsignale erzeugt und an die Stelleinrichtungen (10) übermittelt werden, wobei
- die Einstellung der Schneidengeometrie so erfolgt, dass die Messdaten nach der Überfahrt des Arbeitsbereiches innerhalb vorgegebener Toleranzen liegen und damit eine gleichbleibende Bodenbearbeitung erfolgt.

## Claims

1. A soil-cultivation unit, comprised of a tractor (21) and a driven soil-cultivation machine or comprised of a tractor (21) and a passive, pulled soil-cultivation device (22) for conservation-type soil cultivation, comprising an equipment carrier with cultivator tools for accommodating one or more cultivator tines (6), **characterized in that**
- Sensors (20) are attached in the front and back of the soil-cultivation unit, as well as in their tool area which capture input parameters for a regulation unit (23),
- the regulation unit (23) accesses data that is recordable before and after travel over a work area in a work process and during the work process,
- control elements (10) are provided, via which the cutting geometry of the cultivator tines (6) is adjustable,
- the regulation unit (23) is equipped to generate control values from the recorded data for setting the cutting geometry during the work process, and
- the cutting geometry of the cultivator tines (6) is permanently adjusted during the work process as a result of the control variables that are generated, and
- the operating depth of the cultivator tines (6), the tilt angle or swivel angle and the angle of spread are adjusted, individually or in combination, to set the cutting geometry of the cultivator tines (6), wherein the adjustment is carried out in dependence upon parameters that are recorded in front of, in and in back of the soil-cultivation unit.

2. The soil-cultivation unit according to claim 1, **characterized in that** the operating depth of the cultivator tine (6) is adjusted via a vertical movement with respect to the surface of the soil.

3. The soil-cultivation unit according to claim 1, **characterized in that** the tilt angle or swivel angle of the cultivator tine (6) is adjusted via swiveling with respect to the surface of the soil.

4. The soil-cultivation unit according to claim 1, **characterized in that** the angle of spread of the cultivator tine (6) is adjusted with respect to the surface of the soil.

5. The soil-cultivation unit according to one of the claims 1 to 4, **characterized in that** the operating depth, the tilt angle or swivel angle and/or the angle of spread can be preset at the beginning of a soil cultivation

6. The soil-cultivation unit according to one of the claims 1 to 5,
**characterized in that** the operating depth, the tilt angle or the swivel angle and/or the angle of spread is preset at a beginning of the soil cultivation.

7. The soil-cultivation unit according to one of the claims 1 to 6, **characterized in that** the operating depth, the tilt angle or swivel angle and/or the angle of spread is adjusted in a centralized fashion for the entire work implement or tool group, or in a decentralized fashion for each tool individually.

8. The soil-cultivation unit according to one of the claims 1 to 7, **characterized in that** the operating depth, the tilt angle or swivel angle and (or the angle of spread is adjusted electrically, hydraulically, mechanically or pneumatically.

9. The soil-cultivation unit according to claim 3, **characterized in that** pivot points are provided for swiveling the cultivator tine in the area of the fastening point of the cultivator tine on the leg or in the area of the leg fixture.

10. The soil-cultivation unit according to claim 2, **characterized in that** an adjustment device is attached for vertical movement of individual cultivator tines or cultivator tine groups between the leg and the cultivator frame / cultivator tine crossbar and the cultivator frame.

11. A method for cultivating the soil with a soil-cultivation unit, comprised of a tractor (21) and a driven soil-cultivation machine or of a tractor (21) and a passive, pulled soil-cultivation device (22) for conservation-type soil cultivation, having an equipment carrier with cultivator tools for accommodating one or more cultivator tines (6),
**characterized in that**
- during the work process measurement data is recorded before and after travel over the work area in the work process and during the work process, sent to a regulation unit (23) and processed by it,
- a permanent adjustment of the cutting geometry is made during the work process via control elements (10) for influencing the cutting geometry of the cultivator tines (6), for which
- control signals are generated by the regulation unit (23) from measurement data recorded in front of, in and in back of the soil-cultivation unit by sensors and are transmitted to the control elements (10), wherein
- the cutting geometry is set in such a way that the measurement data is within predetermined tolerances during travel over the work area and consistent soil cultivation therefore takes place.

## Revendications

1. Unité de travail du sol, formée à partir d'un véhicule tracteur (21) et d'une machine de travail du sol entraînée ou à partir d'un véhicule tracteur (21) et d'un appareil de travail du sol (22) tracté passif servant au travail du sol de conservation, comprenant un support d'appareil doté d'outils agricoles servant à recevoir un ou plusieurs socs agricoles (6), **caractérisée en ce que**
- des capteurs sont installés devant et derrière l'unité de travail ainsi que dans sa zone d'outil, lesquels capteurs détectent des valeurs d'entrée pour une unité de régulation,
- l'unité de régulation (23) utilise des données qui peuvent être acquises au cours du processus de travail, avant et après le passage sur une zone de travail ainsi que pendant le processus de travail,
- des dispositifs de réglage (10) sont prévus, à l'aide desquels la géométrie de coupe des socs agricoles (6) peut être réglée,
- l'unité de régulation (23) est conçue de telle sorte que des valeurs de réglage pour le réglage de la géométrie de coupe peuvent être produites pendant le processus de travail à partir des données acquises,
- la géométrie de coupe des socs agricoles (6) peut être réglée de manière permanente pendant le processus de travail en réponse aux valeurs de réglage produites, et
- pour le réglage de la géométrie de coupe des socs agricoles (6), la profondeur de travail du soc agricole (6), l'angle d'inclinaison ou de pivotement et l'angle d'écartement sont conçus de manière à pouvoir être réglés indépendamment ou en combinaison, le réglage s'effectuant en fonction de paramètres détectés par les capteurs avant, dans et après l'unité de travail du sol.

2. Unité de travail du sol selon la revendication 1, **caractérisée en ce que** la profondeur de travail du soc agricole (6) peut être réglée par un déplacement vertical par rapport à la surface du sol.

3. Unité de travail du sol selon la revendication 1, **caractérisée en ce que** l'angle d'inclinaison ou de pivotement du soc agricole (6) peut être réglé par pivotement par rapport à la surface du sol.

4. Unité de travail du sol selon la revendication 1, **caractérisée en ce que** l'angle d'écartement du soc agricole (6) par rapport à la surface du sol peut être réglé.

5. Unité de travail du sol selon l'une des revendications 1 à 4, **caractérisée en ce que** la profondeur de travail, l'angle d'inclinaison ou de pivotement et/ou l'angle d'écartement sont/peuvent être préréglés au début du travail du sol.

6. Unité de travail du sol selon l'une des revendications 1 à 5, **caractérisée en ce que** la profondeur de travail, l'angle d'inclinaison ou de pivotement et/ou l'angle d'écartement sont/peuvent être réglés en fonction de l'usure sur le soc.

7. Unité de travail du sol selon l'une des revendications 1 à 6, **caractérisée en ce que** la profondeur de travail, l'angle d'inclinaison ou de pivotement et/ou l'angle d'écartement sont/peuvent être réglés de manière centralisée pour tout l'appareil de travail, un groupe d'outil ou de manière décentralisée pour chaque outil individuellement.

8. Unité de travail du sol selon l'une des revendications 1 à 7, **caractérisée en ce que** la profondeur de travail, l'angle d'inclinaison ou de pivotement et/ou l'angle d'écartement sont/peuvent être réglés de manière électrique, hydraulique, mécanique ou pneumatique.

9. Unité de travail du sol selon la revendication 3, **caractérisée en ce que** des points de pivotement sont prévus dans la zone de la fixation de soc à la tige ou dans la zone du serrage de la tige pour pivoter le soc.

10. Unité de travail du sol selon la revendication 2, **caractérisée en ce qu'**un dispositif de déplacement est installé entre la tige de soc et le châssis agricole/entre la traverse de soc et le châssis agricole pour déplacer verticalement des socs individuels/des groupes de socs.

11. Procédé de travail du sol à l'aide d'une unité de travail du sol, formée à partir d'un véhicule tracteur (21) et d'une machine de travail du sol entraînée ou à partir d'un véhicule tracteur (21) et d'un appareil de travail du sol (22) tracté passif servant au travail du sol de conservation, comprenant un support d'appareil doté d'outils agricoles servant à recevoir un ou plusieurs socs agricoles (6), **caractérisé en ce que**
- au cours du processus de travail, avant et après le passage sur une zone de travail ainsi que pendant le processus de travail, des données de mesure sont détectées par des capteurs, acheminées à une unité de régulation (23) et traitées par celle-ci,
- un réglage permanent de la géométrie de coupe est effectué pendant le processus de travail au moyen de dispositifs de réglage (10) servant à influencer la géométrie de coupe des socs agricoles (6),
- des signaux de réglage sont produits par l'unité de régulation (23) à partir de données de mesure détectées par les capteurs avant, dans et après l'unité de travail du sol et transmis aux dispositifs de réglage (10),
- le réglage de la géométrie de coupe s'effectuant de telle sorte que les données de mesure se situent à l'intérieur de tolérances prédéfinies après le passage sur la zone de travail et par conséquent un travail constant du sol s'effectue.
